# EUROPÄISCHE PATENTANMELDUNG

(11) **EP 0 763 920 A2**
(43) Veröffentlichungstag der Anmeldung: **19.03.1997**
(21) Anmeldenummer: 96114519.0
(22) Anmeldetag: 11.09.1996
(51) Int. Cl.: H04L 29/06

(54) **Verfahren zur Kodierung oder Dekodierung von Protokolldateneinheiten (PDU)**

(30) Priorität: 15.09.1995 DE 19534207
(71) Anmelder: ALCATEL N.V., NL-2288 BH Rijswijk (NL)
(72) Erfinder: Frohmüller, Peter, 15370 Fredersdorf (DE); Klaue, Mario, 12689 Berlin (DE)
(74) Vertreter: Schätzle, Albin, Dipl.-Phys.

(57) **Zusammenfassung**

Es wird vorgeschlagen, in einem offenen System (TN), in dem für eine Übertragung von Daten zwischen Systemelementen (VSTA, VSTX) eine Kodierung oder Dekodierung dieser Daten durchgeführt wird, Definitionen von unterschiedlichen Datentypen, die die Daten haben können, in ein Definitionswörterbuch einzutragen. In einem Programm zur Ausführung der Kodierung und Dekodierung werden generische Funktionen auf abstrakte Datentypen angewendet. Zur Laufzeit des Programms werden die anwenderspezifischen Daten eingelesen und deren Datentyp festgestellt. Die Definition dieses Datentyps wird dem Definitionswörterbuch entnommen und den abstrakten Datentypen zugewiesen, so daß die Funktionen des Programms mit den anwenderspezifischen Daten ausgeführt werden.

## Beschreibung

Die vorliegende Erfindung betrifft ein Verfahren zur Kodierung und Dekodierung von Protokolldateneinheiten in einem offenen System.

Ein solches offenes System beinhaltet eine Vielzahl von Systemelementen, zwischen denen eine Kommunikation zur Steuerung von Anwendungen innerhalb des offenen Systems stattfindet. Diese Kommunikation wird über Protokolle abgewickelt. Die bei dieser Kommunikation übertragenen Informationen zwischen den Systemelementen werden in Form von Protokolldateneinheiten übertragen. Dazu müssen in den Systemelementen anwenderspezifische Daten für die Übertragung kodiert und übertragene und von den Systemelementen empfangene, kodierte Protokolldateneinheiten zur weiteren Verarbeitung in den Systemelementen dekodiert werden. Für die Übertragung der Protokolldateneinheiten wird eine Übertragungssprache verwendet. Eine solche Übertragungssprache ist BER (Basic Encoding Rules), die aus der CCITT Empfehlung X.209 bekannt ist. In den CCITT Empfehlungen X.720 und X.721 wird ein prinzipielles Modell eines solchen offenen Systems beschrieben. Die anwenderspezifischen Daten sind einem Objekt des offenen Systems zugeordnet und können unterschiedliche Datentypen haben. Diese Datentypen sind durch ihre Struktur und ihrer Eigenschaften definiert. Solche Definitionen für die unterschiedlichen Datentypen werden in abstrakten Beschreibungssprachen festgelegt. Solche abstrakten Beschreibungssprachen sind GDMO, bekannt aus der CCITT Empfehlung X.724, und ASN.1, bekannt aus der CCITT Empfehlung X.208.

Für die Durchführung der Kodierung und Dekodierung wird ein Programm erstellt, für dessen Ausführung der verwendete Datentyp der anwenderspezifischen Daten, die mit dem Programm verarbeitet werden, bekannt sein muß. Ändert sich der Datentyp, dann muß das Programm für diesen Datentyp neu compiliert werden.

Es ist die Aufgabe der vorliegenden Erfindung, ein Verfahren anzugeben, mit dem eine Kodierung oder Dekodierung von Protokolldateneinheiten vorgenommen werden kann, ohne daß zu Beginn der Laufzeit des Programmes der Datentyp der zu verarbeitenden anwenderspezifischen Daten bekannt ist.

Diese Aufgabe ist durch die Lehre des Patentanspruchs 1 bzw. des Patentanspruchs 2 gelöst.

Vorteilhafte Ausgestaltungen der Erfindung, sind den abhängigen Patentansprüchen zu entnehmen.

Im folgenden wird zur Verdeutlichung der Erfindung und ihrer Vorteile ein Anwendungsbeispiel und ein Ausführungsbeispiel anhand der Figuren 1 bis 3 beschrieben. Es zeigen:
- Fig. 1: ein Anwendungsbespiel eines Telekommunikationsnetzes als offenes System,
- Fig. 2: ein Ablaufdiagramm eines Ausführungsbeispiels des erfindungsgemäßen Verfahrens und
- Fig. 3: ein Implementierungsbeispiel des Ausführungsbeispiels des erfindungsgemäßen Verfahrens.

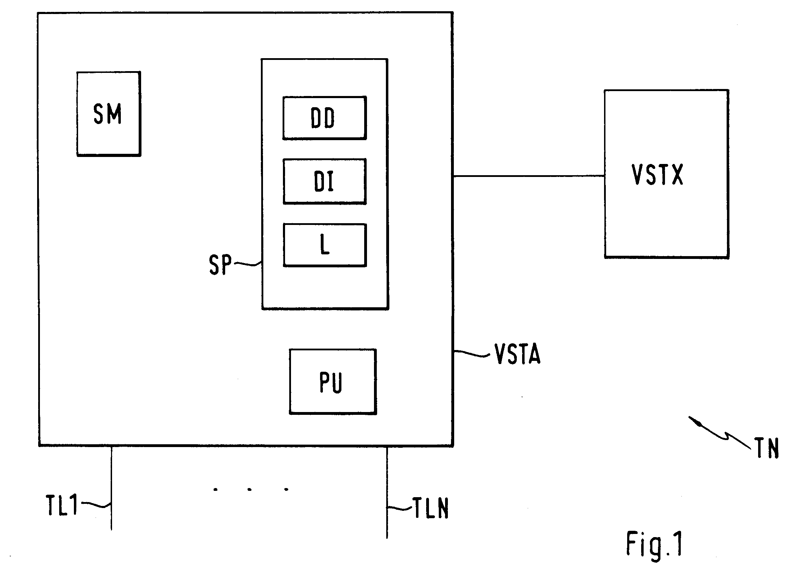

Fig. 1 zeigt ein Anwendungsbeispiel eines offenen Systems mit Systemelementen. Das offene System ist im vorliegenden Fall ein Telekommunikationsnetz und die Systemelemente sind Vermittlungsstellen. Die Erfindung ist aber keineswegs auf eine Anwendung in einem Telekommunikationsnetz beschränkt. Es ist beispielsweise auch möglich, die Erfindung in einem Computernetz anzuwenden, in dem z.B. Zugriffe auf Datenbanken vorgenommen werden. Generell kann die Erfindung in jedem offenen System angewendet werden, in dem Daten eines bestimmten Datentyps in Daten in einer Übertragungssprache (z.B. BER) gewandelt werden müssen und umgekehrt, ohne das zu Beginn der Laufzeit des die Wandlung vornehmenden Programmes der Datentyp der zu wandelnden Daten notwendigerweise bekannt ist. Die Daten, die mit dem Programm zu wandeln sind, beziehen sich auf beliebige Objekte des offenen Systems. Ein solches Objekt ist eine beliebige Teileinheit des offenen Systems. Diese Objekte müssen definierte Eigenschaften haben, die durch die Daten beschrieben werden und die manipulierbar sind. Manipulierbar bedeutet in diesem Zusammenhang, daß die Daten beispielsweise gelöscht, geändert oder erzeugt werden können.

Ein Telekommunikationsnetz TN des vorliegenden Anwendungsbeispiels weist eine Vielzahl von Vermittlungsstellen auf, von denen im folgenden nur eine erste Vermittlungsstelle VSTA und eine zweite Vermittlungsstelle VSTX weiter beschrieben werden. Die beiden Vermittlungsstellen VSTA und VSTX sind über Anschlußleitungen miteinander verbunden. Zwischen den beiden Vermittlungsstellen VSTA und VSTX findet eine Kommunikation zur Steuerung von Anwendungen in dem Telekommunikationsnetz statt, die über Kommunikationsprotokolle abgewickelt wird. Die Daten mit den Informationen dieser Kommunikation werden mittels einer vorgegebenen Übertragungsfunktion in einer bestimmten Übertragungssprache übertragen. Diese Übertragungssprache ist in dem vorliegenden Anwendungsbeispiel die aus der CCITT Empfehlung X.209 bekannte BER (Basic Encoding Rules). Es ist allerdings auch möglich, eine andere Übertragungssprache, wie beispielsweise PER (Packet Encoding Rules), zu verwenden. Für die Übertragung zwischen den Vermittlungsstellen VSTA und VSTX werden die Daten zu Protokolldateneinheiten (Protocol Data Unit = PDU) zusammengefaßt.

Stellvertretend für die Vermittlungsstellen des Telekommunikationsnetzes TN wird im folgenden der für die Verdeutlichung der Erfindung notwendige Aufbau der Vermittlungsstelle VSTA beschrieben. Zur Steuerung der für die Erfindung notwendigen Abläufe innerhalb der Vermittlungsstelle VSTA weist diese ein Steuermittel SM auf. Das Steuermittel SM greift dabei auf Daten zu, die in einem Speicher SP und in einem Puffer PU abgespeichert sind. An die Vermittlungsstelle VSTA ist eine Vielzahl von in der Fig. 1 nicht dargestellten Teilnehmerstationen über Teilnehmerleitungen TL1, ..., TLn angeschlossen. Ein Objekt des Telekommunikationsnetzes TN kann eine beiliebige Teileinheit des Telekommunikationsnetzes TN sein, beispielsweise eine der Teilnehmerstationen, deren Teilnehmernummer, einer der Teilnehmeranschlüsse in der Vermittlungsstelle VSTA oder die Vermittlungsstelle selbst. In einem ersten Speicherbereich PI des Speichers SP wird das in einer Implementierungssprache geschriebene Programm zur Wandlung der Daten abgespeichert. Das Programm ist so implementiert, daß generische Funktionen auf abstrakte Datentypen angewendet werden. Generische Funktionen sind in den Lage, auf unterschiedliche Datentypen einer bestimmten Implementierungssprache angewendet werden zu können. Ein abstrakter Datentyp ist ein Datentyp, dessen innere Struktur nicht bekannt ist oder absichtlich verborgen wird. Ein abstrakter Dytentyp wird dadurch nutzbar, daß ihm mittels einer Zugriffsfunktion eine konkrete Definition eines Datentyps zugewiesen wird. Abstrakte Datentypen werden in dem Aufsatz "Abstraction techniques in modern programming languages" von Mary Shaw, IEEE Software, Oktober 1984, Seiten 10 bis 26 näher beschrieben. Die generischen Funktionen, die in dem Programm angewendet werden können, sind in einem zweiten Speicherbereich L des Speichers SP abgelegt, so daß bei der Ausführung des Programms auf sie zugegriffen werden kann. In einem dritten Speicherbereich DD des Speichers SP sind Definitionen einer Vielzahl von Datentypen abgespeichert. Diese Definitionen beschreiben die Struktur und die Eigenschaften der jeweiligen Datentypen. Die Definitionen sind im vorliegenden Anwendungsbeispiel in einer abstrakten Beschreibungssprache abgefaßt, z.B. in der aus der CCITT Empfehlung X.724 bekannten GDMO (Guidelines for the definition of managed objects) oder in der aus der CCITT Empfehlung X.208 bekannten ASN.1 (Abstract syntax notation 1). Es ist allerdings auch möglich, andere Beschreibungssprachen zur Beschreibung der Definitionen der Datentypen zu verwenden.

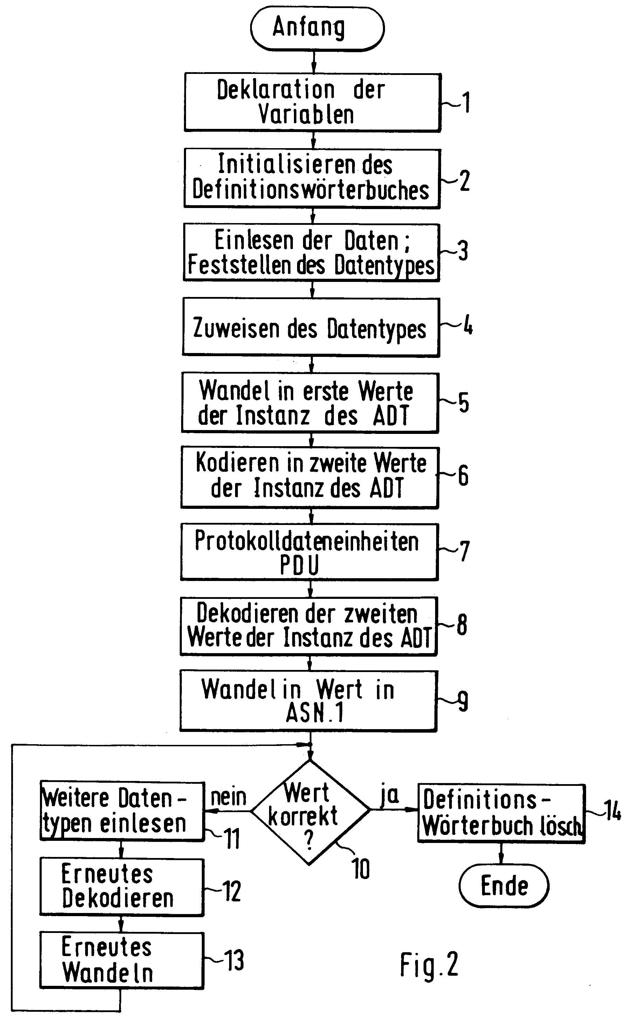

Fig. 2 beschreibt ein Ablaufdiagramm eines Ausführungsbeispiels des erfindungsgemäßen Verfahrens zur Kodierung oder Dekodierung von Protokolldateneinheiten. In einem Schritt 1 wird eine Deklaration von für die Implementierung des Verfahrens notwendigen Variablen durchgeführt. Daraufhin erfolgt in einem Schritt 2 das Initialisieren eines Definitionswörterbuches. Dem Definitionswörterbuch werden dabei Definitionen von Datentypen aus dem dritten Bereich DD des Speichers SP zugewiesen. Die Zugriffsfunktion eines der abstrakten Datentypen greift bei der Zuweisung eines Datentypes an den abstrakten Datentyp auf dieses Definitionswörterbuch zu. In einem Schritt 3 werden daraufhin anwenderspezifische Daten des Objektes eingelesen, die für die Übertragung in dem Telekommunikationsnetz TN zu kodieren sind. Diese Daten besitzen eine festgelegte Datendefinition und entsprechen einem konkreten Datentyp. Die Daten des Objektes sind in einer Datei durch einen in der abstrakten Beschreibungssprache abgefaßten dritten Wert angegeben. Dieser dritte Wert wird ausgewertet und der Datentyp der Daten des Objektes festgestellt. In einem Schritt 4 wird dann den abstrakten Datentypen die Definition des bestimmten Datentyps der Daten des Objektes in der verwendeten Implementierungssprache zugewiesen. In einem folgenden Schritt 5 werden die Daten des Objektes in erste Werte einer Instanz des abstrakten Datentyps mit einer internen Datenstruktur gewandelt. Die Instanz des abstrakten Datentyps ist dabei eine konkrete Darstellung des Objektes in der internen Datenstruktur und wird im Programm durch eine der Variablen dargestellt. In einem Schritt 6 wird daraufhin auf die ersten Werte eine generische Kodierungsfunktion angewendet und dadurch die ersten Werte in zweite Werte in der Übertragungssprache kodiert. Diese zweiten Werte werden anschließend in einem Schritt 7 für die Übertragung in dem Telekommunikationsnetz TN zu Protokolldateneinheiten zusammengefaßt. Dazu werden die zweiten Werte in dem Puffer PU der Vermittlungsstelle VSTA vor der Übertragung zwischengespeichert.

Es ist möglich, vor der Übertragung der Protokolldateneinheiten zunächst eine Überprüfung dieser Protokolldateneinheiten vorzunehmen. Dazu wird in einem Schritt 8 auf die zweiten Werte in der Übertragungssprache eine generische Dekodierungsfunktion angewendet. Dabei werden die zweiten Werte in vierte Werte der Instanz des abstrakten Datentyps dekodiert. Diese vierten Werte der Instanz des abstrakten Datentyps werden in einem Schritt 9 in einen in der abstrakten Beschreibungssprache abgefaßten fünften Wert gewandelt. In einem Schritt 10 wird überprüft, ob der fünfte Wert dem dritten Wert in der abstrakten Beschreibungssprache entspricht. Ist das nicht der Fall, dann werden in einem Schritt 11 Definitionen von weiteren Datentypen in das Definitionswörterbuch eingelesen. In einem Schritt 12 erfolgt daraufhin ein erneutes Dekodieren der zweiten Werte in vierte Werte der Instanz des abstrakten Datentyps und in einem Schritt 13 ein erneutes Wandeln der vierten Werte in den fünften Wert in der abstrakten Beschreibungssprache. Anschließend verzweigt das Verfahren erneut zu dem Schritt 10, in dem erneut überprüft wird, ob dieser fünfte Wert dem dritten Wert in der abstrakten Beschreibungssprache entspricht. Ist dies der Fall, so verzweigt das Verfahren nach dem Schritt 10 zu einem Schritt 14, in dem das Defintionswörterbuch gelöscht wird und das Verfahren anschließend beendet ist.

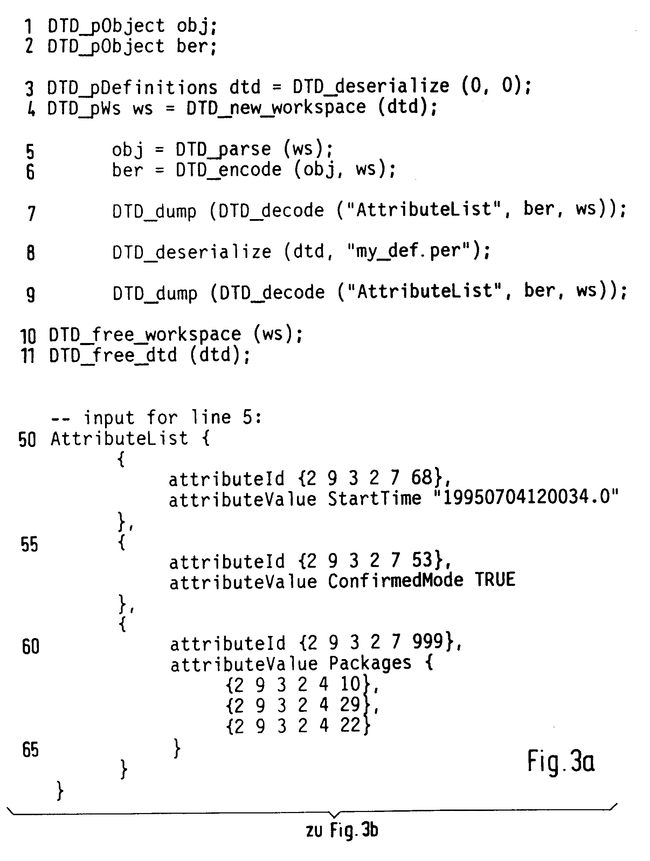

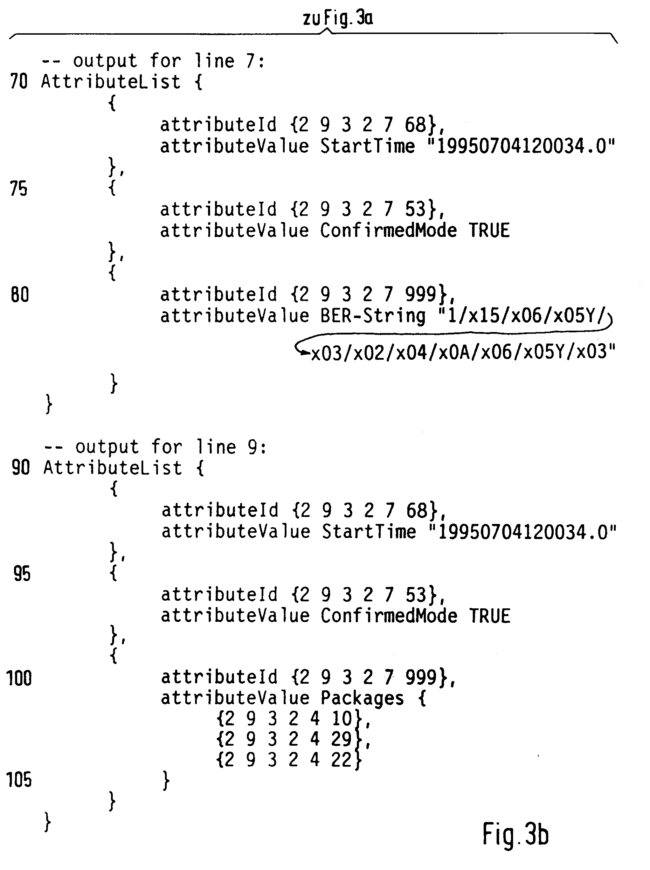

Fig. 3 beschreibt ein Implementierungsbeispiels des oben beschriebenen Ausführungsbeispiels des erfindungsgemäßen Verfahrens in der Programmiersprache C. Dieses Implementierungsbeispiel wird als Programm in dem ersten Speicherbereich PI des Speichers SP abgespeichert. Die verwendeten Funktionen sind generische Funktionen, die in einer Bibliothek in dem zweiten Speicherbereich L abgelegt sind, auf den für die Durchführung des Programms zugegriffen wird. In einer Zeile 1 wird mittels der Funktion DTD pObject die Deklaration einer Variablen obj durchgeführt. Diese Variable obj ist eine Instanz eines abstrakten Datentypes. In einer Zeile 2 wird mittels der Funktion DTD_pObject die Deklaration einer Variablen ber durchgeführt. Diese Variable ber ist ebenfalls eine Instanz eines abstrakten Datentypes. In einer Zeile 3 wird mittels der Funktion DTD_pDefinitions die Deklaration einer Variablen dtd durchgeführt. Dieser Variablen dtd wird mittels der generischen Funktion DTD_deserialize ein Definitionswörterbuch zugewiesen, das mit Definitionen von Datentypen aus dem dritten Speicherbereich DD des Speichers SP gefüllt wird. Die Datei, in der die Definitionen dieser Datentypen abgespeichert ist, wird durch die in Klammern gesetzten Zahlen 0,0 angegeben. In einer Zeile 4 findet mittels der Funktion DTD_pWs die Deklaration einer Variablen ws statt. Dieser Variablen ws wird mittels der Funktion DTD_new_workspace ein neuer Speicherbereich zugewiesen, der für die Erzeugung von Werten der Instanzen von abstrakten Datentypen genutzt werden kann. Diese Reservierung von Speicher erleichtert die Fehlerhandhabung und erhöht die Speicherallokierungsgeschwindigkeit. In einer Zeile 5 werden daraufhin die ersten Werte der Instanz obj des abstrakten Datentyps mittels der Funktions DTD_parse erzeugt. Dazu werden die Daten des Objektes, die in einer AttributeList abgespeichert sind, eingelesen. Diese AttributeList, die in Zeile 5 eingelesen wird, ist in Zeile 50 bis 67 gezeigt. Die Daten sind dabei in der AttributeList durch einen in der abstrakten Beschreibungssprache, die im vorliegenden Beispiel die Beschreibungssprache ASN.1 ist, abgefaßten dritten Wert wiedergegeben. Dieser dritte Wert ist in dem vorliegenden Implementierungsbeispiel die in den geschweiften Klammern der AttributeID angegebene Zahlenkombination, die ein Suchkriterium darstellt, um in dem Definitionswörterbuch den konkreten Datentyp der Daten festzustellen, und der Attribute Value, der ein Abbild der DAten in der abstrakten Beschreibungssprache ASN.1 ist. Der in ASN.1 abgefaßte dritte Wert wird ausgewertet und damit der konkrete Datentyp der Daten des Objektes festgestellt. Die Angaben in der AttributeList sind dabei der CCITT Empfehlung X.734 zur "Event report management function" entnommen. Die in der abstrakten Beschreibungssprache ASN.1 abgefaßte Definition des Datentyps wird anschließend in die Implementierungssprache transformiert und der Datentyp dem abstrakten Datentyp, auf den die Funktionen des Implementierungsbeispieles angewendet werden, zugewiesen. Die in der Zeile 5 erzeugten ersten Werte der Instanz obj des abstrakten Datentypes werden in einer Zeile 6 anschließend durch die Anwendung einer Funktion DTD_encode in zweite Werte der Instanz ber des abstrakten Datentyps kodiert. Diese in der Zeile 6 erzeugten zweiten Werte der Instanz ber können anschließend in Protokolldateneinheiten zusammengefaßt und über das Telekommunikationsnetz TN übertragen werden. Zur Überprüfung der in der Zeile 6 erzeugten kodierten zweiten Werte erfolgt in einer Zeile 7 durch die Anwendung der Dekodierungsfunktion DTD_decode die Dekodierung der zweiten Werte. Dabei entstehen die vierten Werte einer Instanz des abstrakten Datentyps. Diese vierten Werte werden daraufhin durch die Anwendung der Funktion DTD_dump in den fünften Wert in der abstrakten Beschreibungssprache ASN.1 gewandelt. Dabei kann anhand der Ausgabe in Zeile 7 überprüft werden, ob diese Ausgabe den eingegebenen Werten der Zeile 5 entsprechen. Die AttributeList, die in Zeile 7 ausgegeben wird, ist in Zeile 70 bis 83 gezeigt. Im vorliegenden Implementierungsbeispiel ist zu erkennen, daß die Werte der AttributeID (2 9 3 2 7 999) nicht den in Zeile 5 eingegebenen für diese AttributeID Werten entsprechen. Es ist also bei der Kodierung ein Fehler unterlaufen, weil der benötigte Datentyp nicht in dem Definitionswörterbuch vorhanden war, auf das der abstrakte Datentyp zugreift. In einer Zeile 8 werden daher mittels der Funktion DTD_deserialize dem Wörterbuch weitere Definitionen von Datentypen, die in der Datei "my_def.per" abgespeichert sind, zugewiesen. Anschließend wird erneut eine Dekodierung der zweiten Werte der Instanz ber des abstrakten Datentyps in einer Zeile 9 mittels der Funktion DTD_decode durchgeführt. Auf die dadurch entstehenden vierten Werte der Instanz des abstrakten Datentyps wird erneut die Funktion DTD_dump angewendet, die die vierten Werte in den fünften Wert in der abstrakten Beschreibungssprache ASN.1 wandelt. Anhand der Ausgabe zu dieser Zeile 9 ist erkennbar, daß der nun erhaltene fünfte Wert für die AttributeID {2 9 3 2 7 999} dem in der Zeile 5 eingelesenen dritten Wert entspricht. Die AttributeList, die in Zeile 9 ausgegeben wird, ist in Zeile 90 bis 107 gezeigt. In einer Zeile 10 wird daraufhin der in der Zeile 4 reservierte Speicherbereich in dem Speicher SP freigegeben. Die Instanzen des abstrakten Datentyps innerhalb dieses Speicherbereichs werden gelöscht. In einem Schritt 11 werden alle Einträge in dem Definitionswörterbuch gelöscht.

## Patentansprüche

1. Verfahren zur Kodierung von Protokolldateneinheiten in einem offenen System (TN) mit einer Vielzahl von Objekten
- bei dem in ein Definitionswörterbuch Definitionen von Datentypen eingegeben werden,
- bei dem Daten eines der Objekte eingelesen werden und diese Daten einen bestimmten Datentyp haben,
- bei dem der bestimmte Datentyp dieser eingelesenen Daten festgestellt wird,
- bei dem generische Funktionen verwendet werden,
- bei dem eine solche generische Funktion auf einen Abstrakten Datentyp angewendet wird und dabei eine Instanz des Abstrakten Datentyps erzeugt wird, die eine konkrete Darstellung des Objektes in einer internen Struktur ist,
- bei dem dem Abstrakten Datentyp, auf den eine der generischen Funktionen angewendet wird, aus dem Definitionswörterbuch die Definition des bestimmten Datentyps zugewiesen wird,
- bei dem aus den eingelesenen Daten mittels der Anwendung einer der generischen Funktionen erste Werte der Instanz des Abstrakten Datentyps erzeugt werden,
- bei dem auf diese ersten Werte eine generische Kodierungsfunktion angewendet wird und die ersten Werte in zweite Werte in einer Übertragungssprache kodiert werden und
- bei dem diese zweiten Werte zu einer Protokolldateneinheit zusammengefaßt werden.

2. Verfahren zur Dekodierung von Protokolldateneinheiten in einem offenen System (TN) mit einer Vielzahl von Objekten,
- bei dem in ein Definitionswörterbuch Definitionen von Datentypen eingelesen werden,
- bei dem Protokolldateneinheiten mit zweiten Werten in einer Übertragungssprache eingelesen werden, die einem der Objekte zugeordnet sind und die einen bestimmten Datentyp haben,
- bei dem der bestimmte Datentyp der eingelesenen zweiten Werte festgestellt wird,
- bei dem generische Funktionen verwendet werden,
- bei dem eine solche generische Funktion auf einen Abstrakten Datentyp angewendet wird und dabei eine Instanz des Abstrakten Datentyps erzeugt wird, die eine konkrete Darstellung des Objektes in einer internen Struktur ist,
- bei dem dem Abstrakten Datentyp, auf den eine der generischen Funktionen angewendet wird, aus dem Definitionswörterbuch die Definition des bestimmten Datentyps zugewiesen wird, und
- bei dem auf die zweiten Werte eine generische Dekodierungsfunktion angewendet wird und die zweiten Werte in erste Werte der Instanz des Abstrakten Datentyps dekodiert werden.

3. Verfahren nach Anspruch 1, dadurch gekennzeichnet, daß ein dritter Wert in einer abstrakten Beschreibungssprache eingelesen wird, der einer Darstellung der eingelesenen Daten des Objektes und deren bestimmten Datentyps entspricht, und daß mittels des dritten Wertes in der abstrakten Beschreibungssprache die ersten Werte der Instanz des Abstrakten Datentyps erzeugt werden.

4. Verfahren nach Anspruch 1 oder 2, dadurch gekennzeichnet, daß in das Definitionswörterbuch Definitionen von weiteren Datentypen eingelesen werden, falls der bestimmte Datentyp vorher nicht in dem Definitionswörterbuch enthalten war und dem Abstrakten Datentyp, auf den eine der generischen Funktionen angewendet wird, der bestimmte Datentyp nicht zugewiesen werden konnte, und daß dem Abstrakten Datentyp nun der bestimmte Datentyp zugewiesen wird.

5. Verfahren nach Anspruch 1 oder 2 dadurch gekennzeichnet, daß das offene System mehrere Systemelemente aufweist, daß zwischen wenigstens zwei dieser Systemelemente eine Kommunikation über ein Protokoll abgewickelt wird und daß bei dieser Kommunikation übertragene Informationen in Form von Protokolldateneinheiten übertragen werden.

6. Verfahren nach Anspruch 5, dadurch gekennzeichnet, daß das offene System ein Telekommunikationsnetz ist und daß die Systemelemente Vermittlungsstellen sind.
